# EUROPÄISCHE PATENTSCHRIFT

(11) **EP 0 528 443 B1**
(45) Veröffentlichungstag und Bekanntmachung des Hinweises auf die Patenterteilung: **17.01.1996**
(21) Anmeldenummer: 92115650.1
(22) Anmeldetag: 12.03.1986
(51) Int. Cl.: H04B 7/08

(54) **Schaltungsanordnung zum Empfang von Radiowellen im VHF-Bereich in Fahrzeugen**
Circuit for receiving radio waves of the VHF-field in vehicles
Dispositif pour la réception dans des véhicules d'ondes radio du domaine VHF

(30) Priorität: 23.03.1985 DE 3510580
(43) Veröffentlichungstag der Anmeldung: 24.02.1993
(62) Teilanmeldung aus: 86103325.6
(73) Patentinhaber: Blaupunkt-Werke GmbH, D-31132 Hildesheim (DE)
(72) Erfinder: Bochmann, Harald, Dr., W-3000 Hannover 21 (DE); Henze, Werner, W-3000 Hannover 51 (DE)

(56) Entgegenhaltungen:
- EP-A- 0 099 112
- EP-A- 0 128 812

## Beschreibung

Gegenstand der Erfindung ist eine neue Schaltungsanordnung nach dem Oberbegriff des Anspruchs 1. Der Oberbegriff des Anspruch 1 basiert sich auf DE-A- 25 14 181.

Der Empfang von Radiowellen im VHF-Bereich in Fahrzeugen mit an herkömmliche Kraftfahrzeugantennen angeschlossene UKW-Stereo-Empfänger ist nicht frei von Störungen. Zur Verbesserung des Empfangs ist es bereits bekannt, zwischen Signalen, welche mit an verschiedenen Stellen der Karosserie angeordneten Stabantennen empfangen werden, je nach der Qualität des Signals automatisch umzuschalten (DE-A-25 14 181). Eine Umschaltung der Antennen kann Vorteile bringen, jedoch läßt sich die Umschaltung selbst bei der Wiedergabe des empfangenen Signals nicht völlig unterdrücken und kann als neue Störung empfunden werden.

Aufgabe der vorliegenden Erfindung ist es, den Empfang von Radiosignalen in VHF-Bereichen in Fahrzeugen weiter zu verbessern.

Zur Verminderung von Störungen der Signalwiedergabe eines UKW-Stereo-Autoempfängers bei Mehrwegeempfang mit einer Stabantenne ist es bekannt, die Signalwiedergabe in Abhängigkeit von der Amplituden-Modulation des Zwischenfrequenzsignals von Stereo- auf Mono-Wiedergabe umzuschalten (DE-A-29 29 647).

In einem Aufsatz in IEEE-Transaction on Consumer Electronics (Vol. CE-26, August 1980, Seite 263 - 269) ist darauf hingewiesen, daß die Stabantenne wegen ihrer richtungsunabhängigen Empfindlichkeit den Mehrwegeempfang nicht unterdrücken kann. Die Verminderung der Interferenzen sei nur mit Richtantennen möglich. Für den Empfang in einem Kraftfahrzeug wird die Verwendung von zwei Richtantennen mit sich ergänzenden Richtempfindlichkeits-Charakteristiken vorgeschlagen, zwischen denen je nach Empfangslage hin- und hergeschaltet wird.

Der Einsatz von zwei Richtantennen ist auch aus dem Überhorizont-Funkverkehr im GHz-Bereich seit vielen Jahren als Space-Diversity-Empfang bekannt. Hierbei sind die zwei Parabolantennen in einer gewissen Entfernung voneinander stationär angeordnet und auf denselben Sender ausgerichtet (EP-A-01 28 812).

Richtantennen nach den bisher bekannt gewordenen Konstruktionen sind wiederum als Antennen für Kraftfahrzeuge offensichtlich nicht geeignet und kommen daher für die Lösung der o. g. Aufgabe nicht in Betracht.

Mit den üblichen Stabantennen. für Kraftfahrzeuge läßt sich die Aufgabe jedoch lösen, wenn die Schaltungsanordnung nach dem Oberbegriff des Anspruchs 1 die Merkmale seines kennzeichnenden Teiles aufweist. Ausführungsbeispiele der Erfindung sind in der Zeichnung anhand mehrerer Figuren dargestellt und in der nachfolgenden Beschreibung näher erläutert. Es zeigt:
- Fig. 1: das Blockschaltbild der zum Verständnis der Erfindung erforderlichen Teile eines UKW-Stereoempfängers mit einem ersten Ausführungsbeispiel,
- Fig. 2: einen Ausschnitt aus Fig. 1 in etwas detaillierterer Darstellung,
- Fig. 3: Zeigerdiagramme zur Veranschaulichung der Funktion der Schaltungsanordnung nach Fig. 1 und 2,
- Fig. 4: ein Ausführungsbeispiel eines Phasendrehgliedes,
- Fig. 5: ein zweites Ausführungsbeispiel eines Phasendrehgliedes,
- Fig. 6: ein Flußdiagramm für das Programm eines das erfindungsgemäße Verfahren steuernden Mikrocomputers.

Gleiche Teile sind in den Figuren mit gleichen Bezugszeichen versehen.

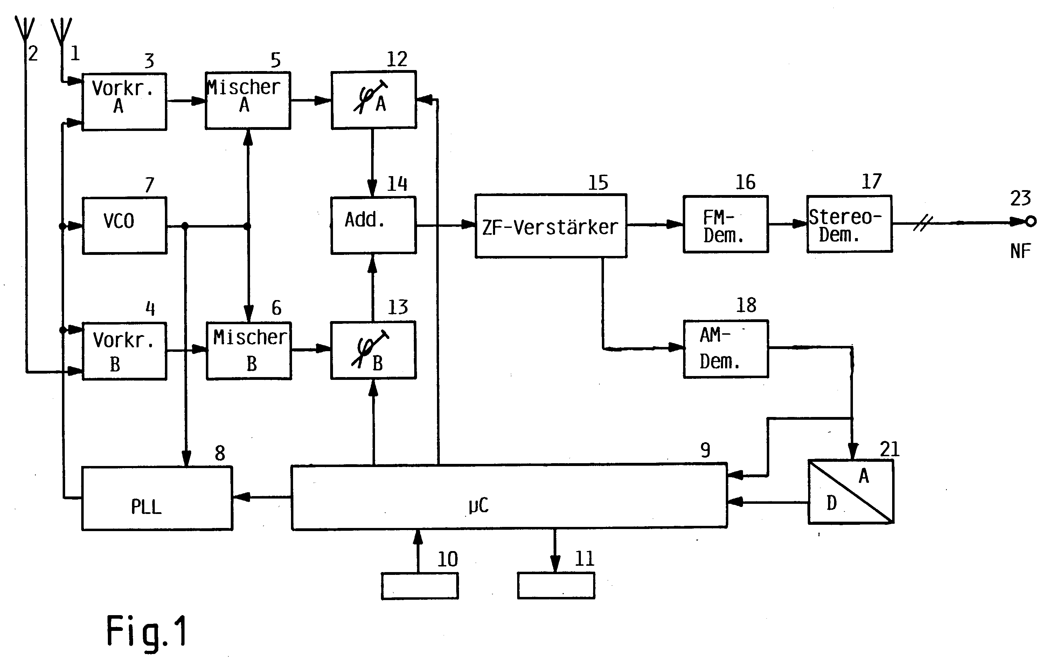

Bei dem in Fig. 1 dargestellten Empfänger gelangen von den Antennen 1 und 2 empfangene Signale über die Vorkreise 3 und 4 zu den Mischern 5 und 6, wo sie mit einem von dem Oszillator 7 erzeugten Träger gemischt werden. In den Figuren und in der nachfolgenden Beschreibung sind Angaben und Teile, die sich auf das Signal der Antennen 1 beziehen, mit dem Index A versehen, während der Index B auf das Signal der Antenne 2 hinweist: Die Abstimmung des Oszillators 7 sowie der Vorkreise 3 und 4 erfolgt in an sich bekannter Weise mit Hilfe der PLL-Schaltung 8, die wiederum von einem Mikrocomputer 9 gesteuert wird, welcher mit Bedienelementen 10 und Anzeigen 11 in Verbindung steht. Die Ausgangssignale der Mischer 5 und 6 (im folgenden Mischsignale genannt) werden über jeweils ein steuerbares Phasendrehglied 12 und 13 einem Addierer 14 zugeführt, der die Mischsignale vektoriell addiert und das Summensignal an den ZF-Verstärker weiterleitet.

Das Ausgangssignal des ZF-Verstärkers 15 wird dann in an sich bekannter Weise mittels eines FM-Demodulators 16 demoduliert und einem Stereodemodulator 17 zugeführt. Das NF-Signal kann dann zur weiteren Verstärkung und Wiedergabe vom Schaltungspunkt 23 abgenommen werden.

Dem FM-Demodulator wird ein begrenztes und einem AM-Demodulator 18 ein unbegrenztes ZF-Signal zur Durchführung des erfindungsgemäßen Verfahrens zugeführt. Der AM-Demodulator 18 dient zur Messung der Amplitude des ZF-Signals und damit indirekt zur Messung der Feldstärke, welche dem jeweils empfangenen Antennensignal zugrundeliegt.

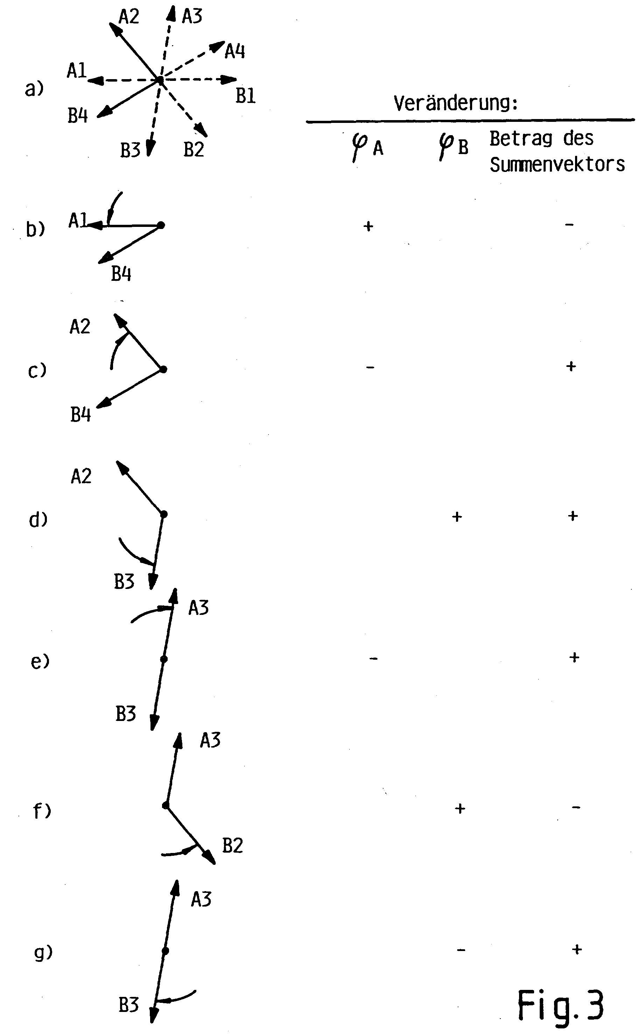

Das Ergebnis der "Feldstärke"-Messung wird einem Analog-Digital-Wandler 21 zugeführt, welcher es als digitales Signal dem Mikrocomputer 9 zuführt. Bevor auf die Funktion des erfindungsgemäßen Ausführungsbeispiels, insbesondere im Zusammenhang mit Fig. 3, genauer eingegangen wird, wird im folgenden die Funktion nur ganz kurz erläutert:

Von Zeit zu Zeit verändert der Mikrocomputer die Phasenlage der Mischsignale zueinander. Wird daraufhin das Ausgangssignal des AM-Demodulators 18 kleiner, erfolgt eine Verschiebung der Phasenlagen in die andere Richtung und wiederum eine Messung der sich dann ergebenden "Feldstärke". Nachdem durch eine derartige Iteration die Phasenlage zwischen den Mischsignalen optimiert wurde, erfolgt in ähnlicher Weise eine Optimierung der Amplituden. Diese Schritte sind im Mikrocomputer 9 als Programm festgelegt.

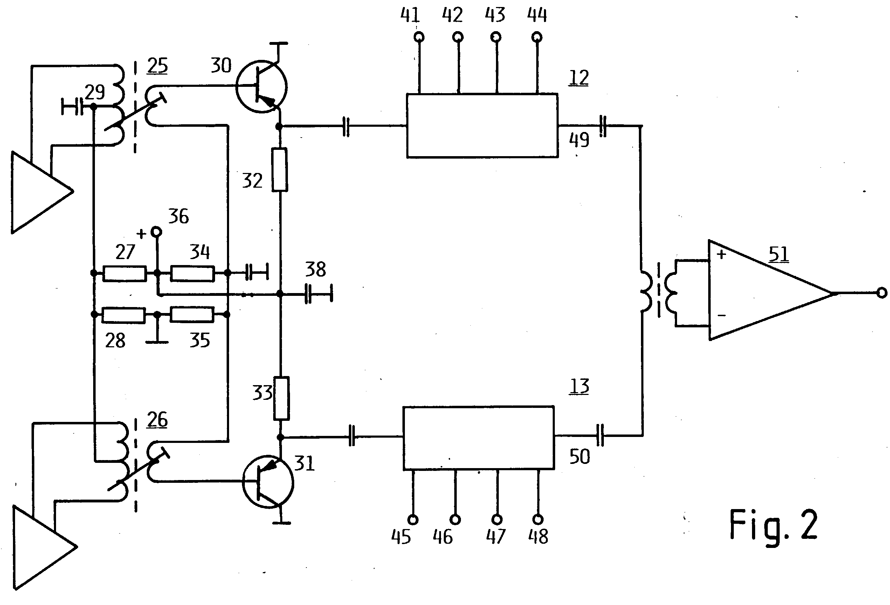

In Fig. 2 sind die Schaltungen 5, 6 und 12 bis 14 detaillierter dargestellt. Da die Mischer 5 und 6 an sich bekannt sind, wurden von diesen lediglich die Gegentaktausgangsübertrager 25, 26, zwei Widerstände 27, 28 zur primärseitigen Spannungsversorgung sowie ein Siebkondensator 29 detaillierter dargestellt. Zur Weiterleitung der Mischsignale zu den Phasendrehgliedern 12 und 13 dient jeweils ein Transistor 30, 31 als Impedanzwandler mit je einem Arbeitswiderstand 32, 33. Zur Versorgung der Basen der Transistoren 30, 31 mit Spannung dient ein Spannungsteiler aus den Widerständen 34, 35, welcher zwischen die bei 36 zugeführte positive Betriebsspannung und Massepotential geschaltet ist. Ferner wird eine bei 37 zugeführte positive Betriebsspannung durch einen Kondensator 38 abgeblockt.

Den Phasendrehgliedern 12 und 13 werden über die Eingänge 41 bis 48 digitale Steuersignale zugeführt. Die Phasendrehung wird bei dem in Fig. 2 gezeigten Ausführungsbeispiel durch steuerbare Verzögerungsleitungen bewirkt, die jeweils eine Signallaufzeit von 4 bis rd. 52 ns aufweisen. Durch die Wahl des binären Vorgabewertes kann die Phase der Mischsignale stufenweise verstellt werden. Die phasengedrehten Mischsignale stehen dann an den Ausgängen 49 und 50 der Phasendrehglieder 12 und 13 zur Verfügung. Der Betrag der vektoriellen Differenz dieser Signale wird dann im Operationsverstärker 51 verstärkt.

Als Phasendrehglieder 12, 13 können auf dem Markt erhältliche digital steuerbare Verzögerungsleitungen, wie sie beispielsweise von der Fa. Data Delay Devices Inc, USA, unter der Bezeichnung PDU-1316 vertrieben werden, verwendet werden.

Die Funktion der in den Fig. 1 und 2 dargestellten Schaltungsanordnung wird nun mit Hilfe der Diagramme in Fig. 3 näher erläutert.

Die Fig. 3 a) bis g) stellen jeweils vektoriell die ZF-Komponenten der Ausgangssignale der Mischer 5 und 6 - und zwar jeweils in jeweils vier verschiedenen Phasenlagen - entsprechend der Einstellung der Phasendrehglieder 12 und 13 dar. Bei der Darstellung gemäß Fig. 3 wurde davon ausgegangen, daß durch die Schaltung der Übertrager 25, 26 die Signale A und B bei gleichphasigen Antennensignalen bereits eine Phasenlage von 180 Grad zueinander aufweisen. Daraus ergibt sich bei gleicher Einstellung der beiden Phasendrehglieder 12 und 13 durch die Subtraktion an den Eingängen des Operationsverstärkers 51 (Fig. 2) letztlich die gewünschte Addition. Bei den Vektordiagrammen nach Fig. 3 ergibt sich der Betrag des Summenvektors also aus der Verbindungslinie der jeweiligen Pfeilspitzen.

In Zeile a) der Fig. 3 sind die ZF-Komponenten A und B der Mischsignale jeweils in vier verschiedenen Phasenlagen dargestellt, welche durch entsprechende Ansteuerung der Phasendrehglieder 12 und 13 erzielt werden.

Wie bereits oben erwähnt, setzt die Darstellung gleichphasige Antennensignale voraus, so daß die Signale A und B bei jeweils gleicher Einstellung der Phasendrehglieder 12 und 13 um 180 Grad phasenverschoben sind. Es sei angenommen, daß in dem dargestellten Augenblick die Signale A2 und B4 zum Addierer 14 weitergeleitet werden. Die übrigen Signale sind daher gestrichelt gezeichnet.

Entsprechend dem gespeicherten Programm prüft der Mikrocomputer 9 (Fig. 1), ob mit einer anderen Einstellung ein besserer Empfang zu erzielen ist. Dabei wird in einem ersten Schritt das Phasendrehglied 12, wie in Zeile b) dargestellt, beeinflußt. Anstelle des Signals A2 wird das Signal A1 zum Addierer 14 geleitet. Die Phase des Signals A wird also in positiver Richtung gedreht. Wie am Zusammenrücken der Pfeilspitzen erkenntlich ist, wird der Betrag des Summenvektors und damit die Amplitude des ZF-Signals kleiner. Dieses wird dem Computer über den AM-Demodulator 18, die Abtast- und Halteschaltung 19 sowie den Analog-Digital-Wandler 21 (Fig. 1) mitgeteilt. Daraufhin ändert er die Richtung der Umschaltung des Phasendrehgliedes 12, so daß sich die in Zeile c) dargestellten Verhältnisse ergeben. Der Betrag des Summenvektors ist wieder gestiegen. Daraufhin wird - wie in Zeile d) gezeigt - die Laufzeit des Phasendrehgliedes 13 geändert, so daß nicht mehr das Signal B4, sondern das Signal B3 zum Addierer 14 gelangt. Dadurch hat sich der Betrag des Summenvektors weiter vergrößert, worauf vom Computer gesteuert die Phasenlage des Signals A in negativer Richtung beeinflußt wird, was zu einer weiteren Steigerung der Amplitude des ZF-Signals führt (Zeile e).

Bei der nächsten, in Zeile f) dargestellten Änderung, wird jedoch die Amplitude des ZF-Signals wieder kleiner, so daß der Mikrocomputer 9 die zuletzt erfolgte Änderung rückgängig macht. Es wird die in Zeile g) dargestellte Phasenlage erreicht.

Der Mikrocomputer 9 prüft von Zeit zu Zeit, ob diese Einstellung noch zu einem optimalen Empfangsergebnis führt. Weisen dann die von der Antenne 1 und 2 empfangenen Signale einen anderen Laufzeitunterschied auf, werden die Phasendrehglieder 12 und 13 automatisch anders eingestellt. Um Fehlsteuerungen zu vermeiden, führen erst mehrere "Feldstärke"-Messungen zur Phasenumschaltung.

Wenn während der Phasendrehung die "Feldstärke" nicht einen vorgegebenen Mindestbetrag erreicht, kann davon ausgegangen werden, daß die Signale A und B im wesentlichen größere Rauschanteile enthalten. Nach einer solchen Feststellung wird bei Stereoempfang automatisch auf Monoempfang umgeschaltet.

Bei einer kontinuierlichen Feldstärkemessungen ist es zweckmäßig, Phasendrehglieder zu verwenden, welche eine kontinuierliche Veränderung der Laufzeit - also der Phasenlage der Mischsignale untereinander - gestatten. Diese Veränderung darf nicht zu schnell erfolgen, da sonst Störungen in dem NF-Signal auftreten. Im übrigen steuert der Mikroprozessor 9 die Laufzeit eines der Mischsignale bzw. beider Mischsignale in ähnlicher Weise, wie es im Zusammenhang mit Fig. 3 erläutert wurde.

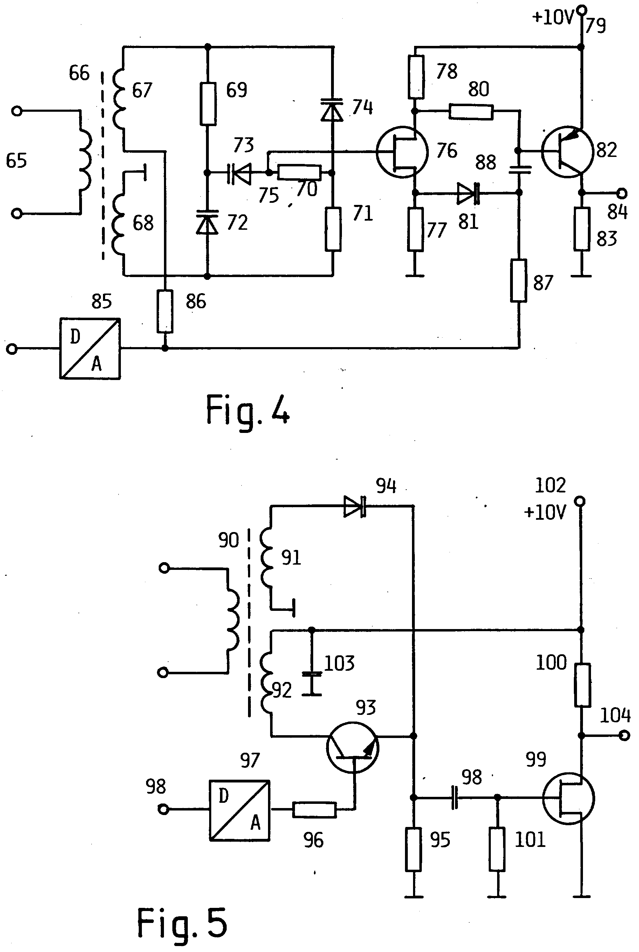

Beispiele für Phasendrehglieder, wie sie in der Schaltungsanordnung nach Fig. 1 verwendet werden können, sind in den Fig. 4 und 5 dargestellt. Der Schaltungsanordnung nach Fig. 4 wird das in der Phase zu drehende Signal über den Eingang 65 und einen Eingangsübertrager 66, welcher zwei bifilare Sekundärwicklungen 67, 68 aufweist, zugeführt. Zur Phasendrehung dienen 3 RC-Glieder, welche aus je einem Widerstand 69, 70 und 71 und je einer Kapazitätsvariationsdiode 72, 73 und 74 bestehen. Das in der Phase gedrehte bzw. in seiner Laufzeit veränderte Signal wird vom Verbindungspunkt 75 zwischen dem Widerstand 70 und der Kapazitätsvariationsdiode 73 abgenommen und einem Feldeffekttransistor 76 zugeführt. Sowohl die Sourceals auch die Drain-Elektrode des Feldeffekttransistors sind über Arbeitswiderstände 77, 78 mit Massepotential bzw. dem Pluspol 79 der Betriebsspannungsquelle verbunden.

Die somit erzeugten gegenphasigen Signale werden über ein weiteres RC-Glied, bestehend aus dem Widerstand 80 und der Kapazitätsvariationsdiode 81 dem als Ausgangsstufe dienenden Transistors 82 zugeführt, dessen Emitter mit dem positiven Pol 79 der Betriebsspannungsquelle und dessen Kollektor über einen Arbeitswiderstand 83 mit Massepotential verbunden sind. Der Kollektor des Transistors 82 dient als Ausgang 84 der Schaltung nach Fig. 4. Die Spannung zur Steuerung der Laufzeit wird vom Mikroprozessor 9 (Fig. 1) über einen D/A-Wandler 85 und über die beiden Widerstände 86 und 87 der Schaltung nach Fig. 4 zugeführt. Die Widerstände 86 und 87 sind derart groß (beispielsweise 100 kOhm) bemessen, daß eine allzu plötzliche Änderung der Laufzeit der Schaltungsanordnung nach Fig. 4 verhindert wird.

Damit die über den Widerstand 87 zugeführte Steuerspannung nicht den Arbeitspunkt des Transistors 82 beeinflußt, ist zwischen die Kapazitätsvariationsdiode 81 und die Basis des Transistors 82 ein Koppelkondensator 88 geschaltet. Mit der Schaltungsanordnung nach Fig. 4 ist eine Phasendrehung von ≥ 180 Grad erreichbar.

In Fig. 5 ist eine Schaltung dargestellt, die nur wenig Aufwand erfordert und mit der ebenfalls eine Phasendrehung ≥ 180 Grad erreicht werden kann. Hierbei wird das Mischsignal ebenfalls über einen. Eingangsübertrager 90 mit bifilarer Sekundärwicklung 91, 92 zugeführt. Ein Transistor 93 dient gleichzeitig als veränderlicher Widerstand und zur Steuerung der Kapazitätsvariationsdiode 94. Als Arbeitswiderstand dient der Widerstand 95. Der Basis des Transistors 93 wird über einen weiteren Widerstand 96 die vom D/A-Wandler 97 abgegebenen Steuerspannung zugeführt. Wie bereits oben beschrieben, erhält der D/A-Wandler 97 entsprechende digitale Signale über den Eingang 98 vom Mikroprozessor 9.

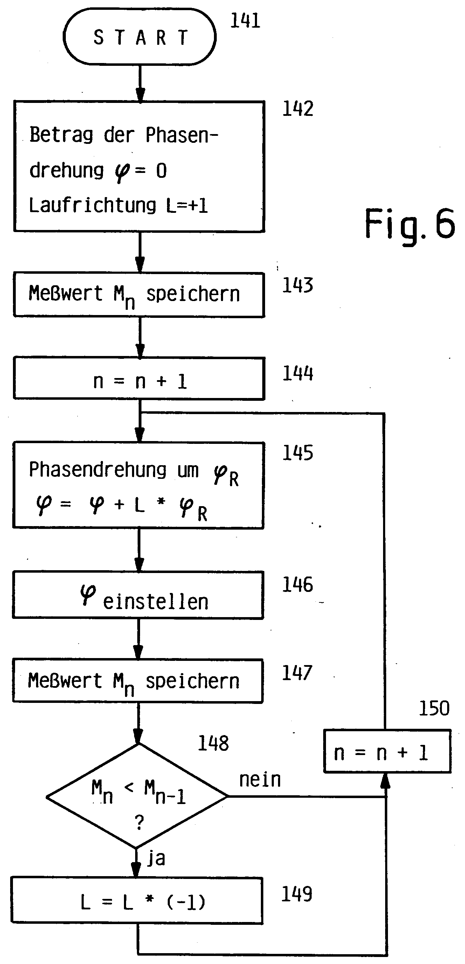

Über einen Koppelkondensator 98 ist die Steuerelektrode eines Feldeffekttransistors 99, welcher zusammen mit dem Arbeitswiderstand 100 als Ausgangsstufe dient, angeschlossen. Ein Widerstand 101 verbindet die Steuerelektrode des Feldeffekttransistors 99 mit Massepotential. Die Betriebsspannung wird beim Schaltungspunkt 102 zugeführt und durch einen Kondensator 103 abgeblockt. Die Drain-Elektrode des Feldeffekttransistor 99 bildet den Ausgang 104 der Schaltung nach Fig. 6.

Aus den Erläuterungen ergibt sich, daß jede beliebige Phasendifferenz der beiden Antennensignale ausgleichbar ist. Das entspricht einer gesamten Phasendrehung von 360 Grad, wobei in Fig. 1 jedes der beiden steuerbaren Phasendrehglieder 12, 13 einen Bereich von 180 Grad aufzuweisen hat.

Fig. 6 zeigt ein Flußdiagramm für ein Programm, nach dem der Mikrocomputer 9 die beschriebenen Einstellungen vornimmt. Nach dem Start bei 141 wird der Betrag der Phasendrehung auf 0 Grad gesetzt und die Laufrichtung - also das Vorzeichen der nächsten vorzunehmenden Änderung der Phasendrehung -vorgegeben. Nachdem dieses bei 142 durchgeführt wurde, wird der vom A/D-Wandler 21 (Fig. 1) dem Mikrocomputer zugeführte Meßwert Mₙ gespeichert (Programmteil 143).

Daraufhin wird bei 144 der Index n um 1 erhöht. Die Phasendrehung wird dann im Programmteil 145 um einen inkrementalen Betrag PHI R erhöht. Die Größe dieses Winkels hängt von der erforderlichen Auflösung der Phasendrehung ab. In der Praxis hat sich ein Wert von 5,6 Grad bewährt, wozu für den vom Mikrocomputer 9 an den D/A-Wandler 132 abzugebenden Wert eine Bit-Breite von 4 erforderlich ist. Diese Einstellung wird durch Ausgabe der entsprechenden Binärzahl an den D/A-Wandler bewirkt (146). Bei 147 wird dann ein neuer Meßwert Mₙ aufgenommen und mit dem vorangegangenen Meßwert Mₙ₋₁ verglichen. Ist der neue Meßwert kleiner, wird bei 149 die Laufrichtung geändert und der Vorgang über 150 fortgesetzt. Ist der neue Meßwert jedoch größer, so wird von der Verzweigung 148 ohne Änderung der Laufrichtung das Programm fortgesetzt.

## Patentansprüche

1. Schaltungsanordnung zur Durchführung eines Verfahrens zum Empfang von Radiowellen im VHF-Bereich in Fahrzeugen,
mit mehreren Antennen (1, 2) für Fahrzeuge für diesen Empfangsbereich
mit einem UKW-Stereoempfänger (15, 16, 17, 23), der einen ZF-Verstärker (15) umfaßt,
und mit einer die Antennen (1, 2) mit dem UKW-Stereo-Empfänger verbindenden Schaltung (3 bis 14),
dadurch gekennzeichnet,
daß in der Schaltung der Eingang des ZF-Verstärkers (15) an den Ausgang einer vektoriellen Addierstufe (14) angeschlossen ist,
daß die Eingänge der vektoriellen Addierstufe (14) über steuerbare Phasendrehglieder (12, 13) mit dem Ausgang von Mischern (5, 6) verbunden sind,
daß der Signaleingang jedes Mischers über einen abstimmbaren Vorkreis (3, 4) an eine zugeordnete der Antennen (1, 2) angeschlossen ist,
daß die Trägereingänge der Mischer (5, 6) an demselben Ausgang eines gemeinsamen Oszillators (7) angeschlossen sind,
daß ein AM-Demodulator (18) an einen Ausgang des ZF-Verstärkers (15) angeschlossen ist, an dem ein unbegrenztes ZF-Signal abnehmbar ist, mit dem die einzelnen Phasendrehglieder (12, 13) über einen Analog-Digital-Wandler (21) und einen Mikrocomputer (9) in der Phase zur Maximierung der Amplitude des Ausgangssignals der Addierstufe (14) derart steuerbar sind, daß das Ausgangssignal sich zur Vermeidung von Störungen im NF-Signal langsam ändert.

## Claims

1. Circuit arrangement for implementing a method for receiving radio waves in the VHF range in vehicles,
having a plurality of antennas (1, 2) for vehicles for this reception range
having a VHF stereo receiver (15, 16, 17, 23), which includes an IF amplifier (15),
and having a circuit (3 to 14) which connects the antennas (1, 2) to the VHF stereo receiver,
characterized
in that in the circuit the input of the IF amplifier (15) is connected to the output of a vectorial adding stage (14),
in that the inputs of the vectorial adding stage (14) are connected to the output of mixers (5, 6) via controllable phase-shifting elements (12, 13),
in that the signal input of each mixer is connected to an assigned antenna (1, 2) via a tunable input circuit (3, 4),
in that the carrier inputs of the mixers (5, 6) are connected to the same output of a common oscillator (7),
in that an AM demodulator (18) is connected to an output of the IF amplifier (15), at which an unlimited IF signal can be tapped, with which the phase of the individual phase-shifting elements (12, 13) can be controlled via an analog/digital converter (21) and a microcomputer (9), in order to maximize the amplitude of the output signal of the adding stage (14), in such a way that the output signal is changed slowly in order to avoid interference in the AF signal.

## Revendications

1. Circuit pour la mise en oeuvre d'un procédé de réception d'ondes radio dans le domaine VHF à bord de véhicules automobiles,
comprenant plusieurs antennes (1, 2) pour le véhicule, pour la plage de réception avec un récepteur stéréo FM (15, 16, 17, 23) équipé d'un amplificateur FI (15),
et un circuit (3-14) reliant les antennes (1, 2) au récepteur stéréo FM, caractérisé en ce que,
- le circuit d'entrée de l'amplificateur FI (15) est relié à la sortie d'un étage additionneur vectoriel (14),
- les entrées de l'étage additionneur vectoriel (14) sont reliées à la sortie des mélangeurs (5, 6) par des éléments de rotation de phase commandés (12, 13),
- l'entrée de signal de chaque mélangeur est reliée à une antenne associée (1, 2) par un circuit amont accordé (3, 4),
- les entrées de porteuse des mélangeurs (5, 6) sont reliées à la même sortie d'un oscillateur (7), commun,
- un démodulateur AM (18 est relié à une sortie de l'amplificateur FI (15), fournissant un signal FI non limité, par lequel les différents éléments de rotation de phase (12, 13) sont commandés par un convertisseur analogique/numérique (21) et un microprocesseur (29) en phase pour rendre maximale l'amplitude du signal de sortie de l'additionneur (14), de façon que le signal de sortie varie lentement pour éviter les parasites dans le signal BF.
